# EUROPÄISCHE PATENTSCHRIFT

(11) **EP 4 116 528 B1**
(45) Veröffentlichungstag und Bekanntmachung des Hinweises auf die Patenterteilung: **21.02.2024**
(21) Anmeldenummer: 22181250.6
(22) Anmeldetag: 27.06.2022
(51) Int. Cl.: E05B 83/32, B60R 7/04, B60N 2/75

(54) **DECKELVORRICHTUNG UND ABLAGEFACH MIT DECKELVORRICHTUNG**
LID DEVICE AND STORAGE COMPARTMENT WITH LID DEVICE
DISPOSITIF COUVERCLE ET COMPARTIMENT DE RANGEMENT POURVU DE DISPOSITIF COUVERCLE

(30) Priorität: 08.07.2021 DE 102021117727
(43) Veröffentlichungstag der Anmeldung: 11.01.2023
(73) Patentinhaber: GRAMMER AG, 92289 Ursensollen (DE)
(72) Erfinder: Stuiber, Martin, 92551 Stulln (DE); Kone, Aly, 90552 Röthenbach a. d. Pegnitz (DE); Wagner, Matthias, 92256 Hahnbach (DE)
(74) Vertreter: Roche, von Westernhagen & Ehresmann

(56) Entgegenhaltungen:
- EP-A2- 3 199 404
- DE-A1-102010 039 821

## Beschreibung

Die Erfindung betrifft zunächst einen Deckel für ein Ablagefach, insbesondere für ein Fahrzeug. Der Deckel umfasst zwei Deckelbereiche. Jeder Deckelbereich ist zwischen einer Schließstellung und einer Offenstellung bewegbar und von einer Feder in eine Offenstellung belastet. Mittels einer Verriegelungsvorrichtung ist jeder Deckelbereich in der Schließstellung verriegelbar. Die Verriegelungsvorrichtung ist lösbar, so dass sich die Deckelbereiche unter der Kraft der Feder in die Offenstellung bewegen können. Mittels einer Einstellvorrichtung kann die Federspannung eingestellt werden. Auf diese Weise lassen sich die Vorspannungen der Federn beider Deckelbereiche derart aufeinander abstimmen, dass ein synchrones Öffnen beider Deckelbereiche erfolgt. Ein solcher Deckel ist aus der DE 10 2010 039 821 A1 bekannt. Zur Einstellung der Vorspannkraft der Feder wird das Federende in einer von einer Mehrzahl von Raststellen verrastet. Die Justierbarkeit der Feder war bezüglich der Feineinstellung begrenzt. Darüber hinaus war die Handhabbarkeit schwierig. Das Federende konnte lediglich mittels eines Werkzeugs gelöst bzw. mit der gewünschten Raststelle in Eingriff gebracht werden.

Eine solche Deckelvorrichtung ist weiterhin aus der EP 3 199 404 A2 bekannt.

Es war gemäß einem ersten Aspekt Aufgabe der Erfindung einen Deckel zu schaffen, der bezüglich der Justierbarkeit und Handhabbarkeit seiner Einstellvorrichtung verbessert ist.

Die Aufgabe wurde gelöst mit einer Deckelvorrichtung mit den Merkmalen des Anspruchs 1.

Die Deckelvorrichtung umfasst einen ersten Deckelbereich und einen zweiten Deckelbereich, wobei jeder Deckelbereich unabhängig von dem jeweils anderen Deckelbereich relativ zu einer Basis zwischen einer Schließstellung und einer Offenstellung bewegbar ist. Die Bewegung des Deckels ist z.B. eine rotatorische, eine translatorische oder eine gemischte Bewegung mit rotatorischen und translatorischen Anteilen.

Von einer Feder als Teil einer Betätigungsvorrichtung ist jeder Deckelbereich in die Offenstellung belastet, wobei sich ein Federschenkel der Feder an der Basis abstützt und ein Federschenkel den Deckel belastet. Die Feder ist Teil einer Betätigungsvorrichtung für einen Deckelbereich. Als Federschenkel ist hier jeder Endbereich der Feder bezeichnet.

Mit einer Verriegelungsvorrichtung, die zwischen einer Riegelposition und einer Löseposition verstellbar ist, ist jeder Deckelbereich separat oder beide Deckelbereiche gemeinsam in der Schließstellung festhaltbar.

Die Federvorspannung wenigstens einer Feder ist mit einer Einstellvorrichtung einstellbar. Mit Federvorspannung ist eine Federspannung gemeint, welche die Feder z.B. in der Offenstellung oder alternativ in der Schließstellung aufweist. Die Einstellvorrichtung umfasst ein Abstützteil für einen Federschenkel der Feder. Das Abstützteil ist dem Deckelbereich oder der Basis zugeordnet.

Das Abstützteil weist Stützmittel auf, an welchen sich ein Federschenkel der Feder abstützen kann. An dem Abstützteil ist z.B. an einem Federschenkelsitz eine Anlagefläche für den Federschenkel ausgebildet, welche von den Stützmitteln umfasst ist. Das Abstützteil bildet ein Widerlager für den Federschenkel der Feder. Der Federschenkel ist z.B. relativ zu dem Abstützteil unbeweglich, wenn er sich in dem Federschenkelsitz befindet.

Das Abstützteil ist bewegbar gelagert, derart, dass aufgrund der Bewegung des Abstützteils unterschiedliche Vorspannungen der Feder einstellbar sind.

Das Abstützteil kann in der eingestellten Position arretiert werden. Dafür weist das Abstützteil wenigstens ein Arretiermittel auf, welches mit einem Gegenarretiermittel an der Basis oder dem Deckelbereich in unterschiedlichen Relativpositionen lösbar, z.B. mittels Formschluss der Arretiermittel und Gegenarretiermittel, in Eingriff bringbar ist, wobei z.B. die unterschiedlichen Relativpositionen mit unterschiedlichen Federspannungen einhergehen.

Das Abstützteil kann z.B. einen Bedienansatz aufweisen, an welchem von einem Benutzer die unterschiedlichen Relativpositionen von Arretiermitteln und Gegenarretiermitteln einstellbar sind.

Mit der erfindungsgemäßen Merkmalskombination ist die Vorspannung des Deckels sehr fein justierbar, wenn die zusammenwirkenden Arretiermittel eine entsprechend feine Stufung aufweisen oder stufenlos verstellbar sind. Die Einstellbarkeit ist unabhängig von der Form des Federschenkels. Die Arretiermittel und Gegenarretiermittel können frei ausgebildet werden.

Darüber hinaus ist die Handhabbarkeit gegenüber dem Stand der Technik verbessert, weil es möglich ist das Abstützteil verglichen mit dem bloßen Federende so auszubilden, dass es von dem Benutzer einfacher gegriffen und eingestellt werden kann.

Die Basis ist z.B. von einem Rahmen des Deckels gebildet. Der Deckel umfasst z.B. einen Rahmen, an welchem jeder Deckelbereich bewegbar, insbesondere schwenkbar, gehalten ist. Der Rahmen ermöglicht die Montage des Deckels als Baugruppe z.B. an einem Behälter oder einer Konsole mit Behälter. Ein Federende stützt sich z.B. an dem Rahmen des Deckels ab.

Jeder Deckelbereich ist z.B. an der Basis, z.B. an einem Rahmen, gelagert. Für die Lagerung können an der Basis geeignete Lagermittel vorgesehen sein, die mit dem Deckelbereich zugeordneten Lagermitteln zusammenwirken, so dass jeder Deckelbereich zwischen der Schließposition und der Offenposition bewegbar ist.

Die Feder ist z.B. von einer Drehfeder gebildet. Eine Drehfeder benötigt einen geringen Bauraum für die Bewegung zwischen einem gespannten Zustand und einem bezüglich des gespannten Zustands entspannten Zustand. Dennoch sind mittels der Drehfeder hohe Federkräfte erzielbar. Eine Drehfeder ist darüber hinaus schmutzunempfindlich, d.h. sie gewährleistet ihre Funktion auch bei relativ starker Verschmutzung.

Jeder Deckel ist z.B. um eine separate Schwenkachse schwenkbar gelagert. Ein erster Deckelbereich ist in diesem Fall um eine erste Schwenkachse und ein zweiter Deckelbereich um eine zweite Schwenkachse zwischen der Schließposition und der Offenposition schwenkbar.

Die erste Schwenkachse ist z.B. parallel zu der zweiten Schwenkachse angeordnet.

Die erste Schwenkachse ist z.B. an einem ersten Seitenbereich der Basis angeordnet und die zweite Schwenkachse ist z.B. an einem dem ersten Seitenbereich gegenüberliegenden zweiten Seitenbereich der Basis angeordnet. Die Seitenbereiche sind z.B. bezüglich einer Öffnung eines Rahmens gegenüberliegend angeordnet, wobei der Rahmen die Basis bildet. Über die Öffnung kann z.B. auf das Ablagefach zugegriffen werden, wenn die Öffnung nicht von den Deckelbereichen verschlossen ist.

Die Drehfeder ist z.B. auf einem Zapfen angeordnet. Eine Längsmittelachse des Zapfens ist z.B. parallel zu der Schwenkachse des Deckelbereichs angeordnet. Die Längsmittelachse des Zapfens fällt z.B. mit der Schwenkachse zugeordneten Deckelbereichs zusammen. Ein Mittelbereich der Drehfeder, welcher Federwindungen aufweist, wird dabei z.B. von dem Zapfen durchgriffen. Ein Federschenkel kann dann auf einfache Weise den Deckelbereich bei seiner Bewegung bis zu der Offenstellung belasten. Z.B. weist der Deckelbereich einen Fortsatz auf, welcher mit einem Federschenkel verbunden ist und von dem Federschenkel in die Offenposition belastet ist.

Z.B. ist das Abstützteil an zwei Lagerstellen gelagert, wobei eine Lagerstelle von dem Eingriff der Arretiermittel und Gegenarretiermittel gebildet ist. Die andere Lagerstelle ist z.B. ein Schwenklager.

Das Abstützteil ist z.B. um den Zapfen oder um einen gesonderten Zapfen schwenkbar gelagert. Das Abstützteil kann - zur Einstellung der Vorspannung der Feder - in die Bewegungsrichtung des Federschenkels der Drehfeder bewegt werden.

Das Abstützteil weist z.B. eine Öffnung auf, welche von dem Zapfen durchgriffen ist. Es sind dann keine weiteren Strukturen zur Lagerung des Abstützteil notwendig. Außerdem haben das Abstützteil und die Drehfeder dieselbe Schwenkachse, wenn auch die Drehfeder auf der Schwenkachse gelagert ist.

Die Öffnung des Abstützteils ist z.B. als Langloch ausgebildet. Es ist dann möglich, das Abstützteil um die Schwenkachse zu drehen, um das Abstützteil in Relativpositionen zu der Basis oder zu dem Deckelbereich zu bewegen und damit den Federschenkel zu bewegen. Darüber hinaus ist das Abstützteil z.B. auch in radiale Richtung bewegbar, um das Abstützteil zwischen einer Eingriffposition, in welcher sich die Arretiermittel in Eingriff mit der Verzahnung befinden, und einer Freigabeposition zu bewegen, in welcher die Arretiermittel außer Eingriff sind. Die Funktionen Einstellung der Vorspannkraft und Arretierung der Feder können auf diese Weise mit wenigen Teilen verwirklicht werden.

Das Abstützteil ist z.B. um die Schwenkachse des zugeordneten Deckelbereichs schwenkbar gelagert. Auch die Mittelachse der Drehfeder ist z.B. koaxial zu der Schwenkachse des zugeordneten Deckelbereichs gelagert, derart, dass die Federschenkel etwa um die Schwenkachse schwenkbar sind.

Das Abstützteil umfasst z.B. einen radialen Arm, an welchem die Stützmittel und / oder die Arretiermittel ausgebildet sind. Mit dem sich radial erstreckenden Arm kann ein größerer Hebelarm erreicht werden, so dass die Arretiermittel auf geringere Kräfte ausgelegt werden können und sie dennoch die Kraft der Vorspannung der Feder sicher halten.

Ein Bedienansatz kann an dem Abstützteil ausgebildet sein. Dieser ist z.B. derart ausgebildet, dass die Justierung der Vorspannkraft ergonomisch günstig möglich ist.

Die Arretiermittel und die Gegenarretiermittel sind z.B. von zusammenwirkenden Formschlussmitteln, wie z.B. von zusammenwirkenden Verzahnungen, gebildet. Die Verzahnung ist z.B. von wenigstens einem zumindest teilweise komplementären Zahn einer Gegenverzahnung gebildet. Die Verzahnung ist z.B. derart ausgebildet, dass bezüglich einer Bewegungsrichtung eine Bewegung des Abstützteils ohne Verstellung in die Freigabeposition möglich ist, indem die Verzahnungen übereinander hinwegbewegbar sind. Alternativ kann eine Bewegung in die Freigabeposition für eine Relativbewegung der Arretiermittel und der Gegenarretiermittel immer notwendig sein.

Gemäß einer Alternativen Ausgestaltung sind die Arretiermittel und die Gegenarretiermittel z.B. von zusammenwirkenden Reib- oder Klemmflächen gebildet. Auf diese Weise ist eine stufenlose Justierung der Federspannung möglich.

Gemäß einem zweiten Aspekt betrifft die Erfindung ein Ablagefach.

Ein solches Ablagefach ist aus der DE 10 2010 039 821 A1 bekannt. Es wird auf die obigen Ausführungen zu diesem Stand der Technik Bezug genommen.

Es war Aufgabe der Erfindung ein Ablagefach zu schaffen, bei welchem eine Öffnung mit einem Deckel mit zwei Deckelbereichen verschließbar ist. Der Synchronlauf der beiden Deckelbereiche soll auf einfache Weise einstellbar sein.

Die Aufgabe wurde gelöst durch ein Ablagefach mit den Merkmalen des Anspruchs 14.

Das Ablagefach umfasst einen Behälter mit einer Öffnung, über welche auf den Behälter zugegriffen werden kann. Die Öffnung ist mit einer Deckelvorrichtung verschließbar, wobei die Deckelvorrichtung nach einem der vorangehenden Ansprüche ausgebildet ist.

In Bezug auf die Vorteile der Erfindung wird - um Wiederholungen zu vermeiden - auf den ersten Aspekt der Erfindung verwiesen.

Ein Ausführungsbeispiel der Erfindung ist in der nachfolgenden Figurenbeschreibung, auch unter Bezugnahme auf die schematischen Zeichnungen, beispielhaft beschrieben. Dabei werden der Übersichtlichkeit halber gleiche oder vergleichbare Teile oder Elemente oder Bereiche mit gleichen Bezugszeichen, teilweise unter Hinzufügung kleiner Buchstaben, bezeichnet.

Merkmale in Bezug auf die Einstellvorrichtung, die nur in Bezug auf ein Ausführungsbeispiel beschrieben, dargestellt oder offenbart sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Die schematischen Fig. zeigen:
Fig. 1 eine Frontansicht der Deckelvorrichtung, wobei sich die zwei Deckelbereiche in einer Schließstellung befinden,
Fig. 2 eine Frontansicht der Deckelvorrichtung, wobei sich ein Deckelbereich in der Offenstellung und ein Deckelbereich in der Geschlossenstellung befindet,
Fig. 3 eine Ansicht gemäß Ansichtspfeil A in Fig. 1,
Fig. 4 eine perspektivische Darstellung einer Rückseite des Abstützteils der Einstelleinrichtung,
Fig. 5 eine perspektivische Ansicht der Feder und des Abstützteils der Einstelleinrichtung,
Fig. 6 eine perspektivische Ansicht eines Deckelbereichs, der Feder und des Abstützteils,
Fig. 7 eine perspektivische Darstellung der Deckelvorrichtung, wobei eine Einstellvorrichtung der Deckelvorrichtung in Explosionsdarstellung gezeigt ist,
Fig. 8 eine Darstellung in Anlehnung an Fig. 7, wobei die Deckelbereiche nicht dargestellt sind,
Fig. 9 eine perspektivische Ansicht der Deckelvorrichtung gemäß Fig. 1,
Fig. 10 in Anlehnung an Fig. 9 die Deckelvorrichtung, wobei das Abstützteil der Einstelleinrichtungen nicht dargestellt ist,
Fig. 11 in Anlehnung an Fig. 9 die Deckelvorrichtung, wobei das Abstützteil und die Feder der Einstelleinrichtungen nicht dargestellt sind,
Fig. 12 eine perspektivische Darstellung der Deckelvorrichtung von vorne, wobei sich die Einstelleinrichtungen in einer ersten Position gemäß Fig. 1 befinden,
Fig. 13 in Anlehnung an Fig. 12 die Deckelvorrichtung, wobei sich die Einstelleinrichtungen in einer zweiten Position gemäß Fig. 1 befinden,
Fig. 14 in Anlehnung an Fig. 12 die Deckelvorrichtung, wobei sich die Einstelleinrichtungen in einer dritten Position gemäß Fig. 1 befinden.

Eine Deckelvorrichtung insgesamt ist in den Fig. mit dem Bezugszeichen 10 bezeichnet.

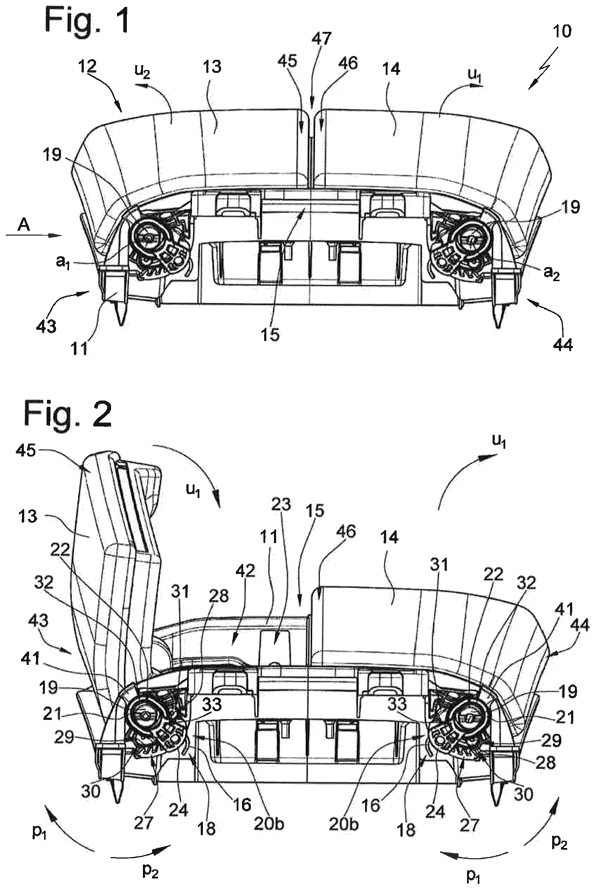

Gemäß Fig. 1 umfasst die Deckelvorrichtung 10 eine Basis 11 - hier in Form eines Rahmens - sowie einen Deckel 12 mit Deckelbereichen 13 und 14. Der Deckel 13 ist um die Schwenkachse a1 in Schwenkrichtungen u1 und u2 schwenkbar gelagert und der Deckel 14 ist um die Schwenkachse a2 in die Schwenkrichtungen u1 und u2 schwenkbar gelagert.

Die Deckelbereiche 13 und 14 können zwischen einer in Fig. 1 dargestellten Schließstellung sowie einer in Fig. 2 dargestellten Offenstellung bewegt werden. Die Schwenkrichtungen u1 und u2 sind für jeden Deckelbereich so definiert, dass die Schwenkrichtung im Uhrzeigersinn gemäß Fig. 1 mit u1 und die Schwenkrichtung entgegen dem Uhrzeigersinn mit u2 bezeichnet ist. Der Deckelbereich 13 kann daher aus der Schließposition gemäß Fig. 1 in Richtung u2 in die Offenposition geschwenkt werden, während der Deckelbereich 14 aus der Schließposition in Richtung u1 in die Offenposition geschwenkt werden kann. Die Bewegung aus der Offenposition in die Schließposition erfolgt jeweils in umgekehrte Richtung.

Die Schwenkachsen a1 und a2 befinden sich an gegenüberliegenden Seitenbereichen 43 und 44 der Basis 11. Ein freier Endbereich 45 des Deckelbereichs 13 ist in der Schließstellung einem freien Endbereich 46 des Deckelbereichs 14 benachbart. Zwischen den Endbereichen 45 und 46 ist ein Spalt 47 gebildet.

In Fig. 2 ist der Deckelbereich 13 in der Offenstellung angeordnet, während sich der Deckelbereich 14 in der Schließstellung befindet. Der Deckelbereich 14 kann in gleicher Weise zwischen einer Schließstellung und einer Offenstellung bewegt werden. In der Offenstellung eines der Deckelbereiche 13 oder 14 oder beider Deckelbereiche 13 und 14 ist über eine Öffnung 42 der Basis 11 ein Zugriff auf ein hier nicht dargestelltes Ablagefach mit einem Behälter möglich.

Mit einer Verriegelungsvorrichtung 15 ist jeder Deckelbereich 13 und 14 in der Schließstellung verriegelbar (siehe Fig. 2). Von der Verriegelungsvorrichtung 15 sind lediglich Verriegelungsmittel 23 erkennbar, die an der Basis 11 ausgebildet sind. Deckelseitige Verriegelungsmittel der Verriegelungsvorrichtung 15 sind in Fig. 2 nicht dargestellt. Die Verriegelungsvorrichtung 15 ist zwischen einer Riegelposition und einer Löseposition bewegbar. In der Riegelposition der Verriegelungsvorrichtung 15 ist wenigstens einer der Deckelbereiche 13 und 14 verriegelt, wenn sich der Deckelbereich 13 und / oder 14 in der Schließstellung befindet. In der Löseposition gibt die Verriegelungsvorrichtung 15 beide Deckelbereiche 13 und 14 frei, so dass eine Bewegung in die Offenstellung möglich ist.

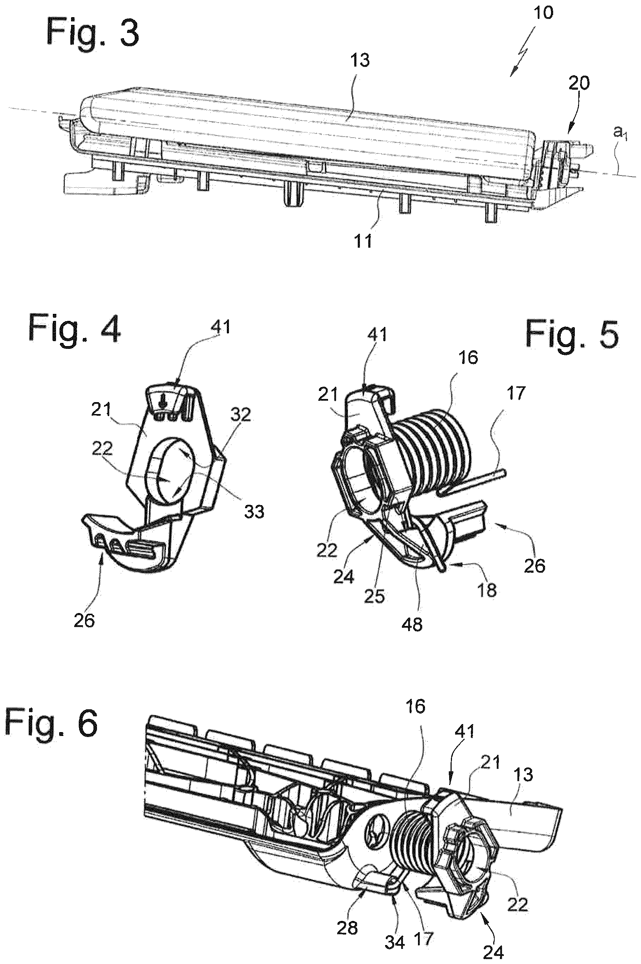

Jeder Deckelbereich 13 und 14 ist von einer Betätigungsvorrichtung 50 mit einer Feder 16 (siehe Fig. 5) in die Offenstellung belastet. Die Feder 16 ist im vorliegenden Ausführungsbeispiel als Drehfeder mit zwei Federschenkeln ausgebildet. Ein erster Federschenkel 17 der Feder 16 belastet den Deckelbereich 13 bzw. 14, ein zweiter Federschenkel 18 stützt sich an einer Fläche eines Abstützteil 21 ab, dessen Funktion nachfolgend noch erläutert wird. Als Federschenkel ist hier jeder Endbereich der Feder 16 bezeichnet. Die Feder 16 ist auf einem Zapfen 19 der Basis 11 gelagert.

Um die Federkraft zur Synchronisation der Öffnungsbewegung der Deckelbereiche 13 und 14 einstellen zu können, weist die Deckelvorrichtung 10 für den Deckelbereich 13 eine Einstellvorrichtung 20a und für den Deckelbereich 14 eine Einstellvorrichtung 20b auf. Alternativ könnte auch lediglich eine der Deckelvorrichtungen 13 oder 14 eine Einstellvorrichtung aufweisen. In diesem Fall wird die Federvorspannung des Deckelbereichs, der eine Einstellvorrichtung aufweist, so eingestellt, dass sich der Deckelbereich mit der gleichen Geschwindigkeit öffnet, wie der andere Deckelbereich, welcher keine Einstellvorrichtung aufweist. Indem beiden Deckelbereichen 13 und 14 jeweils eine Einstellvorrichtung 20a bzw. 20b zugeordnet ist, ist eine genauere Justierung sowie eine Justierung möglich, wenn die Grenze eines Einstellbereichs erreicht ist.

Da die Einstellvorrichtungen 20a und 20b prinzipiell gleich ausgebildet sind, wird nachfolgend lediglich die Einstellvorrichtung 20a beschrieben.

Die Einstellvorrichtung 20a umfasst gemäß der Fig. 4 und 5 das Abstützteil 21, welches auf dem Zapfen 19 gelagert ist. Es wird an dieser Stelle darauf hingewiesen, dass das Abstützteil 21 in den Fig. 1, 2, 7, 8 und 9 optisch etwas anders ausgebildet ist, als in den Fig. 4 bis 6 und 12 bis 14. In Bezug auf die Funktion handelt es sich aber bei den optisch unterschiedlichen Ausführungen um die gleichen Teile. Das Abstützteil 21 umfasst eine Öffnung 22 welche von dem Zapfen 19 durchgriffen ist, so dass es um die Schwenkachse a1 schwenkbar ist. Ein Arm 24 des Abstützteils 21 erstreckt sich radial zu der Schwenkachse a1. Der Arm 24 umfasst Stützmittel 25 in Form einer Anlagefläche eines Federschenkelsitzes 48 (siehe Fig. 5) zum Abstützen des Federschenkels 18 sowie Arretiermittel 26, die mit Gegenarretiermitteln 27 der Basis 11 (in Fig. 2 erkennbar) zusammenwirken. Die Arretiermittel 26 und die Gegenarretiermittel 27 sind Teil einer Arretiervorrichtung 40.

Gemäß einer alternativen Ausführung könnten das Abstützteil 21 sowie die Gegenarretiermittel 27 an dem Deckelbereich 13 und / oder 14 ausgebildet sein. Stehen die Arretiermittel 26 und die Gegenarretiermittel 27 in Eingriff, stützt sich das Abstützteil 21 an dem Zapfen 19 sowie den Gegenarretiermitteln 27 ab. Die Arretiermittel 26 können in unterschiedlichen Relativpositionen mit den Gegenarretiermitteln 27 in Eingriff stehen. Die unterschiedlichen Relativpositionen entsprechen unterschiedlichen Vorspannungen der Feder 16. Das Abstützteil 21 ist relativ zu den Gegenarrtiermitteln 27 zwischen einer Eingriffsposition, in welcher die Arretiermittel 26 und die Gegenarretiermittel 27 in Eingriff stehen, und einer Freigabeposition, in welcher sie außer Eingriff stehen, bewegbar.

Hier sind die Arretiermittel 26 und die Gegenarretiermittel 27 von zusammenwirkenden Verzahnungen gebildet. Die Gegenarretiermittel 27 umfassen Zähne, die auf einem Teilkreis mit dem Mittelpunkt a1 liegen. An dem Abstützteil 21 sind gemäß Fig. 4 Zähne ausgebildet, die mit den Zähnen der Basis 11 zusammenwirken. Dabei ist bei einem Schwenken des Abstützteils 21 der Einstellvorrichtung 20a in Richtung p2 eine ratschende Bewegung ohne Bewegung des Abstützteils 21 in die Freigabeposition möglich, während das Abstützteil 21 in die Freigabeposition bewegt werden muss, um es in Richtung p1 verschwenken zu können. Alternativ kann auch eine Verstellung in die Freigabeposition für beide Bewegungsrichtungen p1 und p2 des Abstützteils 21 notwendig sein.

Die Deckel 13 und 14 umfassen jeweils einen Vorsprung 28 (siehe Fig. 6), der ein Langloch 29 der Basis 11 durchgreift. Die Bewegung des Deckelbereichs 13 ist auf diese Weise begrenzt. Außerdem steht der Vorsprung 28 mit dem Federschenkel 17 derart in Kontakt, dass der Federschenkel 17 den Vorsprung 28 und damit den gesamten Deckelbereich 13 in die Offenstellung belastet. Im vorliegenden Ausführungsbeispiel weist der Vorsprung 28 eine Aussparung 34 auf, in welche der Federschenkel 17 einsteckbar ist. Alternativ ist aber jede formschlüssige oder kraftschlüssige Verbindung denkbar.

In der Schließstellung des Deckelbereichs 13 ist der Vorsprung 28 an einem ersten Endbereich 30 des Langlochs 29 angeordnet. In der Offenstellung befindet sich der Vorsprung 28 an einem zweiten Endbereich 31 des Langlochs 29. Der Federschenkel 17 bewegt sich somit gemeinsam mit dem Vorsprung 28. Der Federschenkel 18 ist grundsätzlich relativ zu dem Rahmen 11 feststehend. Wenn allerdings eine Einstellung der Vorspannung der Feder 16 vorgenommen wird, wird der Federschenkel 18 relativ zu dem Federschenkel 17 bewegt. Dabei liegt der Federschenkel 18 immer an den Stützmitteln des Abstützteils 21 an, welches ein Widerlager für den Federschenkel 18 bildet.

In Fig. 2 sind die Arretiervorrichtungen 40 der Einstelleinrichtungen 20a und 20b erkennbar. Die Öffnung 22 des Abstützteils 21 ist als Langloch ausgebildet. Das Abstützteil 21 ist daher auf dem Zapfen 19a zwischen einer Eingriffposition und einer Freigabeposition bewegbar. In der Eingriffposition sind die Arretiermittel 26 mit den Gegenarretiermitteln 27 in Eingriff und der Zapfen 19 befindet sich an einem Endbereich 32 der Öffnung 22. In der Freigabeposition sind die Arretiermittel 26 und die Gegenarretiermittel 27 außer Eingriff und der Zapfen 19 ist an einem Endbereich 33 der Öffnung 22 angeordnet. Die Arretiermittel 26 und die Gegenarretiermittel 27 sind bei dem vorliegenden Ausführungsbeispiel als Verzahnung ausgebildet. Sie können aber auch von andern formschlüssig oder kraftschlüssig zusammenwirkenden Arretiermitteln gebildet sein. Beispielsweise könnten die Arretiermittel und die Gegenarretiermittel auch durch Verklemmung in unterschiedlichen Relativpositionen miteinander fixierbar sein.

Das Abstützteil 21 wird von dem Federschenkel 18 der Feder 16 radial nach außen relativ zu der Schwenkachse a1 in die Eingriffposition belastet. Die Verstellung in die Freigabeposition erfolgt entgegen der Federkraft des Federschenkels 18.

Die Betätigung zwischen der Eingriffposition und der Freigabeposition kann an einem Betätigungsansatz 41 erfolgen, welcher an dem Abstützteil 21 ausgebildet ist.

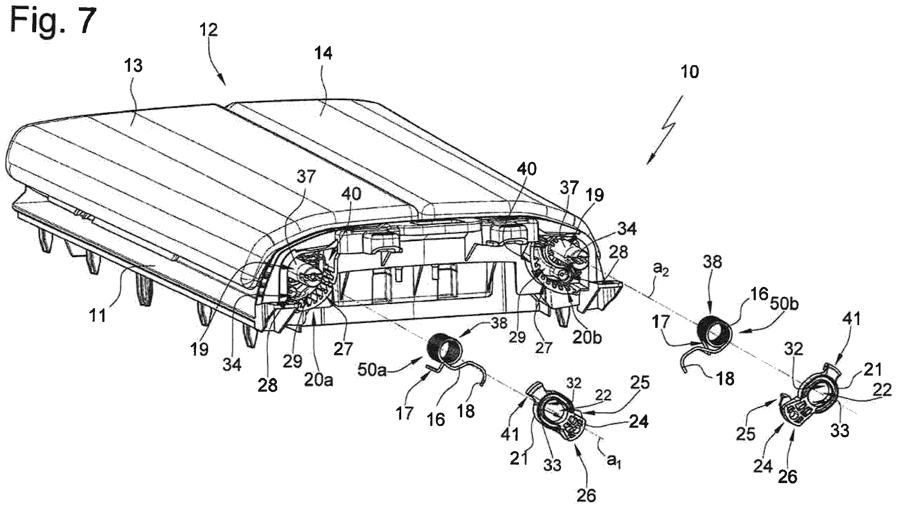

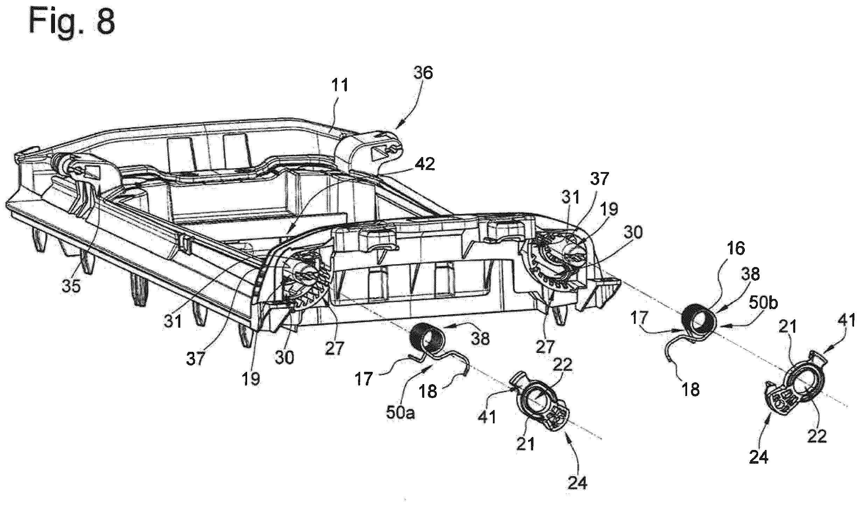

Fig. 7 ist eine perspektivische Darstellung der Deckelvorrichtung gemäß Fig. 1, wobei die Einstellvorrichtung in Explosionsdarstellung gezeigt ist. Fig. 8 unterscheidet sich von Fig. 7, indem die Deckelbereiche 13 und 14 der Übersichtlichkeit halber nicht dargestellt sind.

In Fig. 8 ist die Basis 11 ohne die Deckelbereiche 13 und 14 dargestellt. Es sind Lagervorrichtungen 35 und 36 in Form von Lagerarmen an der Basis 11 ausgebildet, wobei in Fig. 5 lediglich ein Lagerarm jeder Lagervorrichtung 35 und 36 zu erkennen ist. Jede Lagervorrichtung 35 und 36 umfasst aber zwei Lagerarme. Von den Lagervorrichtungen 35 und 36 werden die Schwenkachsen a1 und a2 gebildet, wobei die Schwenkachse a1 bzw. a2 im vorliegenden Ausführungsbeispiel mit einer Längsachse des Zapfens 19 der jeweiligen Einstellvorrichtung 20 fluchtet, was nicht zwingend der Fall sein muss.

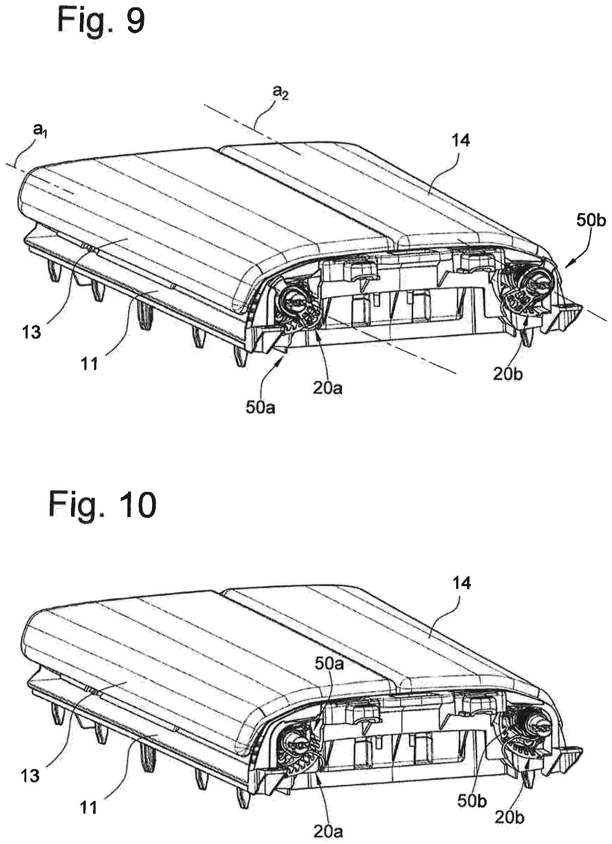

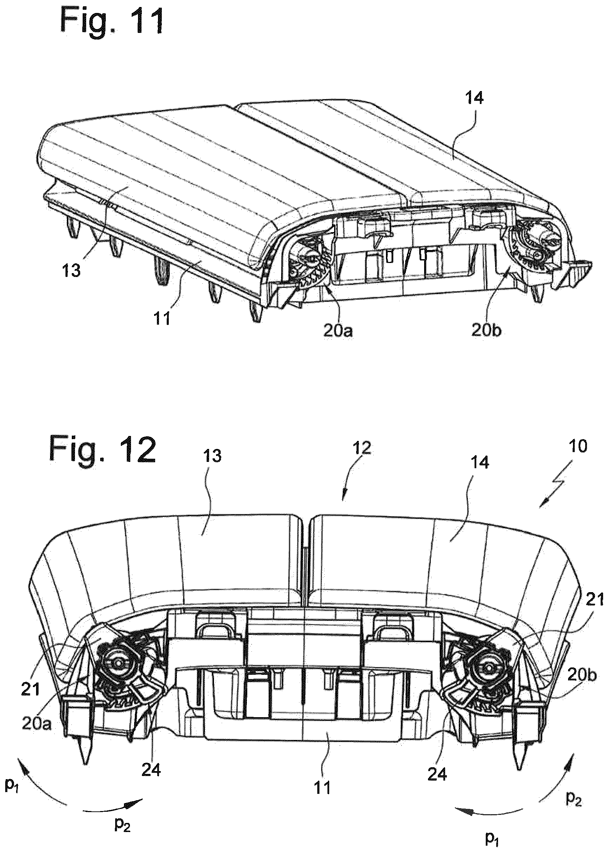

In Fig. 9 ist die Deckelvorrichtung 10 gemäß Fig. 1 in perspektivischer Ansicht dargestellt, wobei sich die Deckelbereiche 13 und 14 in der Schließposition befinden. Fig. 10 unterscheidet sich von Fig. 9, indem der Übersichtlichkeit halber die Abstützteile 21 nicht dargestellt sind. Fig. 11 unterscheidet sich von Fig. 9, indem die Abstützteile 21 sowie die Federn 16 nicht dargestellt sind.

Die Funktionsweise der Deckelvorrichtung 10 wird nachfolgend beschrieben.

Wenn die Verriegelungsvorrichtung 15 (hier nicht näher dargestellt) von der Riegelposition in die Löseposition verstellt wird, was im vorliegenden Ausführungsbeispiel für beide Deckelbereiche 13 und 14 zugleich erfolgt, bewegt sich der Deckelbereich 13 unter der Belastung der Feder 16a in Richtung u2 und der Deckelbereich 14 unter der Belastung der Feder 16b in Richtung u1 aus der Schließposition gem. Fig. 1 synchron in die Offenposition. Der Deckelbereich 13 kann dann manuell entgegen der Kraft der Feder 16 in Richtung u1 und der Deckelbereich 14 in Richtung u2 zurück in die Schließposition bewegt werden, in welcher der jeweilige Deckelbereich 13 und / oder 14 automatisch von der Verriegelungsvorrichtung 15 verriegelt wird.

Die Deckelbereiche 13 und 14 können einzeln verriegelt werden, d.h. die Verriegelung eines der Deckelbereiche 13 und 14 ist auch möglich, wenn sich der andere Deckelbereich noch in der Offenstellung befindet. Mit anderen Worten, die Verriegelungsvorrichtung 15 bewegt sich automatisch und separat für jeden Deckelbereich 13 und 14 in die Riegelposition, sobald der jeweilige Deckelbereich sich in der Schließposition befindet.

Bei der Verstellung der Verriegelungsvorrichtung 15 in die Löseposition bewegen sich die Deckelbereiche 13 und 14 zugleich in die Offenposition. Um die synchrone Bewegung zu gewährleisten und eine Nachjustierung z.B. bei Ermüdung der Feder 16 vornehmen zu können, ist die Vorspannung der Federn 16 mittels der Einstellvorrichtungen 20a und 20b einstellbar. Für eine Synchronisation wäre es - wie oben erwähnt - auch ausreichend, wenn eine der Einstellvorrichtungen 20a oder 20b vorhanden wäre.

Zur Verstellung der Arretiervorrichtung 40 der jeweiligen Einstellvorrichtung 20a und 20b kann das Abstützteil 21a bzw. 21b radial zu der Schwenkachse a1 bzw. a2 derart entgegen der Federkraft des Federschenkels 18 bewegt werden, dass sich der Zapfen 19 von dem Endbereich 32 der Öffnung 22 aus der Eingriffsposition zu dem Endbereich 33 in die Freigabeposition bewegt. Die Arretiermittel 26 sind in der Freigabeposition außer Eingriff mit der Verzahnung 27.

Die Verstellung der Vorspannkraft erfolgt bei beiden Einstellvorrichtungen 20a, 20b im Wesentlichen gleich, die Einstellvorrichtungen 20a und 20b sind aber spiegelverkehrt aufgebaut. Eine Erhöhung der Federspannung erfolgt bei der Einstellvorrichtung 20a durch Schwenken des Abstützteils 21 in Richtung p2 und bei der Einstellvorrichtung 20b durch Schwenken des Abstützteils 21 in Richtung p1.

Nachfolgend soll lediglich die Einstellvorrichtung 20a anhand von Fig. 12 erläutert werden. Das Abstützteil 21 kann ohne Bewegung in die Freigabeposition entgegen dem Uhrzeigersinn in Richtung p2 relativ zu der Verzahnung 27 geschwenkt werden, um die Vorspannung zu erhöhen oder - nach einer Bewegung des Abstützteils in die Freigabeposition - in Richtung p1 geschwenkt werden, um die Vorspannung zu vermindern.

Wird das Abstützteil 21a dann entlastet, bewegt der Federschenkel 18 das Abstützteil 21a derart, dass sich der Zapfen 19a in den Endbereich 32 bewegt, wobei sich die Arretiermittel 26 in Eingriff mit den Gegenarretiermitteln 27 bewegen. Die Arretiervorrichtung 40 ist dann wieder in der Eingriffposition angeordnet. Solange die Öffnungsbewegung der Deckelbereiche 13 und 14 nicht synchron verlaufen, kann mit dem Abstützteil in der beschriebenen Weise nachjustiert werden.

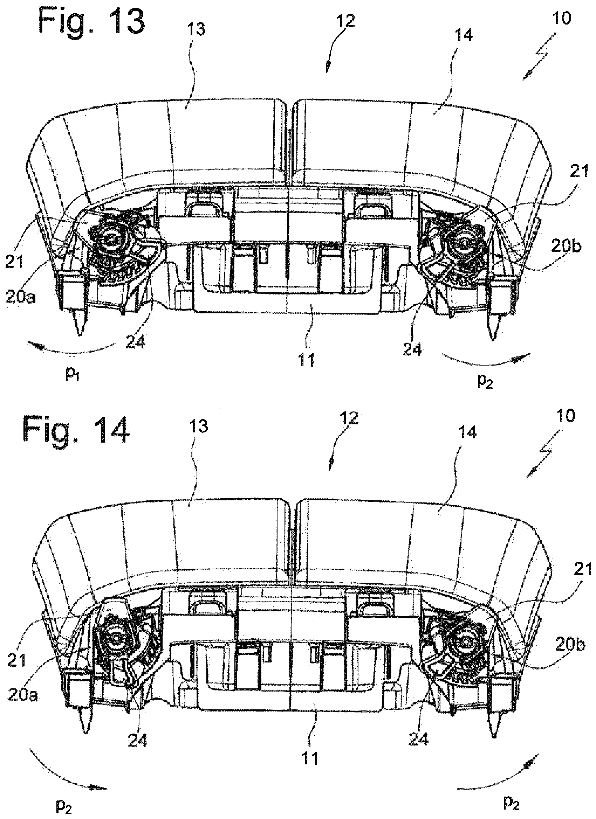

Gemäß Fig. 13 wurde das Abstützteil 21 in Bezug auf die Position gemäß Fig. 12 in Richtung p2 gedreht und in der eingestellten Position verriegelt.

Die Vorspannung der Feder 16 wurde also in Bezug auf die Einstellung gemäß Fig. 12 erhöht. Ist eine Reduzierung der Federspannung gewünscht, muss das Abstützteil 21 in Richtung p1 gedreht werden.

Gemäß Fig. 14 wurde das Abstützteil 21 in Bezug auf die Position gemäß Fig. 12 in Richtung p1 geschwenkt und in der eingestellten Position verriegelt. Die Vorspannung der Feder 16 wurde also in Bezug auf die Einstellung gemäß Fig. 12 reduziert.

Nachfolgend wird die Montage der Deckelvorrichtung 10 beschrieben:
Die Deckelbereiche 13 und 14 werden in den Montagesitz an den Lagerarmen der Lagervorrichtungen 35 und 36 eingesetzt, so dass die Vorsprünge 28 jedes Deckelbereichs 13 und 14 das Langloch 29 durchgreifen.

Anschließend werden die Federn 16 auf den Zapfen 19 der jeweiligen Einstelleinrichtungen 20a und 20b aufgesetzt, so dass ein Mittelbereich 38 der Feder 16 eine Mantelfläche 37 des Zapfens 19 koaxial umschlingt. Der Federschenkel 17 wird in die Aussparung 34 des Vorsprungs 28 eingesteckt. Der Federschenkel 18 wird mit den Stützmitteln 25 des Federschenkelsitzes 48 des Arms 24 verbunden und das Abstützteil 21 wird auf den jeweiligen Zapfen 19 aufgesetzt. Ein Sicherungselement 39 wird zur Verhinderung eines axialen Lösens der Feder 16 und des jeweiligen Abstützteils 21a und 21b von ihrem Sitz auf dem Zapfen 19 an dem Zapfen 19 befestigt.

## Patentansprüche

1. Deckelvorrichtung (10) mit einem ersten Deckelbereich (13) und einem zweiten Deckelbereich (14) , wobei jeder Deckelbereich (13, 14) relativ zu einer Basis um eine separate Schwenkachse (a1, a2) zwischen einer Schließstellung und einer Offenstellung bewegbar ist, und von einer Feder (16a, 16b) in die Offenstellung belastet ist, wobei sich ein Federschenkel (18) der Feder (16a, 16b) an der Basis abstützt und ein Federschenkel (17) den Deckelbereich (13, 14) belastet, und mit einer Verriegelungsvorrichtung, die zwischen einer Riegelposition und einer Löseposition verstellbar ist, in der Schließstellung festhaltbar sind wobei die Federvorspannung wenigstens eines Deckelbereichs (13, 14) mit einer Einstellvorrichtung (20) einstellbar ist, **dadurch gekennzeichnet, dass** die Einstellvorrichtung (20) ein Abstützteil (21a, 21b) für einen Federschenkel (18) der Feder (16a, 16b) umfasst, welches der Basis oder dem Deckelbereich (13, 14) zugeordnet ist und welches bewegbar gelagert ist und Arretiermittel (26) aufweist, welche mit Gegenarretiermitteln (27) in unterschiedlichen Relativpositionen lösbar in Eingriff bringbar ist, derart, dass unterschiedliche Federspannungen einstellbar sind, wobei das Abstützteil (21a, 21b) Stützmittel (25) aufweist, an welchen sich der eine Federschenkel (18) der Feder (16a, 16b) abstützen kann.

2. Deckelvorrichtung nach Anspruch 1, **dadurch gekennzeichnet, dass** die Basis von einem Rahmen (11) mit einer Öffnung gebildet ist.

3. Deckelvorrichtung nach Anspruch 1 oder 2, **dadurch gekennzeichnet, dass** jeder Deckelbereich (13, 14) an der Basis (11) schwenkbar gelagert ist.

4. Deckelvorrichtung nach einem der vorangehenden Ansprüche, **dadurch gekennzeichnet, dass** der erste Deckelbereich (13) um eine erste Schwenkachse (a1) und der zweite Deckelbereich (14) um eine zweite Schwenkachse (a2) schwenkbar ist.

5. Deckelvorrichtung nach Anspruch 4, **dadurch gekennzeichnet, dass** die erste Schwenkachse (a1) an einem ersten Seitenbereich (43) der Basis (11) angeordnet ist und die zweite Schwenkachse (a2) an dem ersten Seitenbereich (43) gegenüberliegenden zweiten Seitenbereich (44) der Basis (11) angeordnet ist.

6. Deckelvorrichtung nach einem der vorangehenden Ansprüche, **dadurch gekennzeichnet, dass** die Feder (16a, 16b) von einer Drehfeder gebildet ist.

7. Deckelvorrichtung nach Anspruch 6, **dadurch gekennzeichnet, dass** die Drehfeder auf einem Zapfen (19) angeordnet ist.

8. Deckelvorrichtung nach einem der vorangehenden Ansprüche, **dadurch gekennzeichnet, dass** das Abstützteil (21) an dem Zapfen (19) oder einem gesonderten Zapfen schwenkbar gelagert ist.

9. Deckelvorrichtung nach Anspruch 8, **dadurch gekennzeichnet, dass** der Zapfen (19) eine Öffnung (22) des Abstützteils (21) durchgreift und dass die Öffnung (22) als Langloch ausgebildet ist.

10. Deckelvorrichtung nach einem der vorangehenden Ansprüche, **dadurch gekennzeichnet, dass** das Abstützteil (21) einen radialen Arm (24) umfasst an welchem die Stützmittel (25) und / oder die Arretiermittel (26) ausgebildet sind.

11. Deckelvorrichtung nach einem der vorangehenden Ansprüche, **dadurch gekennzeichnet, dass** das Abstützteil (21) einen Federschenkelsitz (48) für den Federschenkel (18) ausbildet, welcher die Stützmittel (25) wenigstens teilweise aufweist.

12. Deckelvorrichtung nach einem der vorangehenden Ansprüche, **dadurch gekennzeichnet, dass** das Abstützteil (21) um die Schwenkachse (a1, a2) des zugeordneten Deckelbereichs (13, 14) schwenkbar ist.

13. Deckelvorrichtung nach einem der vorangehenden Ansprüche, **dadurch gekennzeichnet, dass** die Arretiermittel (26) und die Gegenarretiermittel (27) von zusammenwirkenden Verzahnungen oder von zusammenwirkenden Klemmflächen gebildet sind.

14. Ablagefach mit einem Behälter mit einer Öffnung, über welche auf den Behälter zugegriffen werden kann, wobei die Öffnung mittels einer Deckelvorrichtung (10) verschließbar ist, **dadurch gekennzeichnet, dass** die Deckelvorrichtung (10) nach einem der vorangehenden Ansprüche ausgebildet ist.

## Claims

1. Lid device (10) having a first lid region (13) and a second lid region (14), wherein each lid region (13, 14) can be moved between a closed position and an open position around a separate pivot axis (a1, a2) relative to a base, and is loaded into the open position by a spring (16a, 16b), wherein one spring limb (18) of the spring (16a, 16b) abuts on the base, and one spring limb (17) loads the lid region (13, 14), and the lid regions can be fixed in the closed position with a locking device, which can be displaced between a bolted position and a released position, wherein the spring pretensioning of at least one lid region (13, 14) can be adjusted with an adjustment device (20), **characterised in that** the adjustment device (20) comprises a support part (21a, 21b) for a spring limb (18) of the spring (16a, 16b), said support part being assigned to the base or to the lid region (13, 14) and being moveably mounted and having arresting means (26) which can be brought into releasable engagement with counter arresting means (27) in different relative positions, such that different spring tensions can be adjusted, wherein the support part (21a, 21b) has supporting means (25), on which the one spring limb (18) of the spring (16a, 16b) can be supported.

2. Lid device according to claim 1, **characterised in that** the base is formed by a frame (11) having an opening.

3. Lid device according to claim 1 or 2, **characterised in that** each lid region (13, 14) is pivotably mounted on the base (11).

4. Lid device according to one of the preceding claims, **characterised in that** the first lid region (13) can be pivoted around a first pivot axis (a1), and the second lid region (14) can be pivoted around a second pivot axis (a2).

5. Lid device according to claim 4, **characterised in that** the first pivot axis (a1) is arranged on a first lateral region (43) of the base (11), and the second pivot axis (a2) is arranged on the second lateral region (44) of the base (11) opposite the first lateral region (43).

6. Lid device according to one of the preceding claims, **characterised in that** the spring (16a, 16b) is formed by a rotary spring.

7. Lid device according to claim 6, **characterised in that** the rotary spring is arranged on a stud (19).

8. Lid device according to one of the preceding claims, **characterised in that** the support part (21) is pivotably mounted on the stud (19) or a separate stud.

9. Lid device according to claim 8, **characterised in that** the stud (19) engages through an opening (22) of the support part (21), and **in that** the opening (22) is formed as a slot.

10. Lid device according to one of the preceding claims, **characterised in that** the support part (21) comprises a radial arm (24) on which the supporting means (25) and/or the arresting means (26) are formed.

11. Lid device according to one of the preceding claims, **characterised in that** the support part (21) forms a spring limb seat (48) for the spring limb (18), which at least partially has the supporting means (25).

12. Lid device according to one of the preceding claims, **characterised in that** the support part (21) can be pivoted around the pivot axis (a1, a2) of the assigned lid region (13, 14).

13. Lid device according to one of the preceding claims, **characterised in that** the arresting means (26) and the counter arresting means (27) are formed by toothings which work together or clamping surfaces which work together.

14. Storage compartment having a container with an opening, via which the container can be accessed, wherein the opening can be closed by means of a lid device (10), **characterised in that** the lid device (10) is formed according to one of the preceding claims.

## Revendications

1. Dispositif de couvercle (10) comprenant une première partie de couvercle (13) et une seconde partie de couvercle (14), dans lequel chaque partie de couvercle (13, 14) est déplaçable par rapport à une base autour d'un axe de pivotement séparé (a1, a2) entre une position de fermeture et une position d'ouverture et est sollicitée par un ressort (16a, 16b) dans la position d'ouverture, dans lequel une branche de ressort (18) du ressort (16a, 16b) s'appuie sur la base et une branche de ressort (17) charge la partie de couvercle (13, 14), et peut être maintenue dans la position de fermeture par l'intermédiaire d'un dispositif de verrouillage qui est réglable entre une position de verrouillage et une position de déverrouillage, et dans lequel la précontrainte de ressort d'au moins une partie de couvercle (13, 14) peut être réglée à l'aide d'un dispositif de réglage (20), **caractérisé en ce que** le dispositif de réglage (20) comprend une partie de support (21a, 21b) pour une branche de ressort (18) du ressort (16a, 16b), qui est associée à la base ou à la partie de couvercle (13, 14) et qui est montée de façon mobile et comprend des moyens de verrouillage (26) qui peuvent être amenés en engagement de façon détachable avec des moyens de contre-verrouillage (27) dans différentes positions relatives, de telle sorte que des tensions de ressort différentes puissent être appliquées, et dans lequel la partie de support (21a, 21b) comprend des moyens de support (25) sur lesquels l'une des branches de ressort (18) du ressort (16a, 16b) peut s'appuyer.

2. Dispositif de couvercle selon la revendication 1, **caractérisé en ce que** la base est formée par un cadre (11) qui comporte une ouverture.

3. Dispositif de couvercle selon la revendication 1 ou 2, **caractérisé en ce que** chaque partie de couvercle (13, 14) est montée de façon pivotante sur la base (11).

4. Dispositif de couvercle selon l'une quelconque des revendications précédentes, **caractérisé en ce que** la première partie de couvercle (13) est capable de pivoter autour d'un premier axe de pivotement (a1) et la seconde partie de couvercle (14) est capable de pivoter autour d'un second axe de pivotement (a2).

5. Dispositif de couvercle selon la revendication 4, **caractérisé en ce que** le premier axe de pivotement (a1) est agencé sur une première région latérale (43) de la base (11) et le second axe de pivotement (a2) est agencé sur une seconde région latérale (44) de la base (11) qui est opposée à la première région latérale (43).

6. Dispositif de couvercle selon l'une quelconque des revendications précédentes, **caractérisé en ce que** le ressort (16a, 16b) est formé par un ressort de torsion.

7. Dispositif de couvercle selon la revendication 6, **caractérisé en ce que** le ressort de torsion est agencé sur une broche (19).

8. Dispositif de couvercle selon l'une quelconque des revendications précédentes, **caractérisé en ce que** la partie de support (21) est montée de façon pivotante sur la broche (19) ou sur une broche séparée.

9. Dispositif de couvercle selon la revendication 8, **caractérisé en ce que** la broche (19) passe à travers une ouverture (22) de la partie de support (21) et **en ce que** l'ouverture (22) se présente sous la forme d'un trou oblong.

10. Dispositif de couvercle selon l'une quelconque des revendications précédentes, **caractérisé en ce que** la partie de support (21) comprend un bras radial (24) sur lequel les moyens de support (25) et/ou les moyens de verrouillage (26) sont agencés.

11. Dispositif de couvercle selon l'une quelconque des revendications précédentes, **caractérisé en ce que** la partie de support (21) forme un siège de branche de ressort (48) pour la branche de ressort (18), qui comprend au moins partiellement les moyens de support (25).

12. Dispositif de couvercle selon l'une quelconque des revendications précédentes, **caractérisé en ce que** la partie de support (21) est capable de pivoter autour de l'axe de pivotement (a1, a2) de la partie de couvercle (13, 14) associée.

13. Dispositif de couvercle selon l'une quelconque des revendications précédentes, **caractérisé en ce que** les moyens de verrouillage (26) et les moyens de contre-verrouillage (27) sont formés par des dentures coopérantes ou par des surfaces de serrage coopérantes.

14. Compartiment de rangement comprenant un récipient comportant une ouverture permettant d'accéder au récipient, dans lequel l'ouverture peut être fermée à l'aide d'un dispositif de couvercle (10), **caractérisé en ce que** le dispositif de couvercle (10) est conçu selon l'une quelconque des revendications précédentes.
